# EUROPEAN PATENT SPECIFICATION

(11) **EP 4 082 250 B1**
(45) Date of publication and mention of the grant of the patent: **14.06.2023**
(21) Application number: 20838956.9
(22) Date of filing: 18.12.2020
(51) Int. Cl.: H04W 36/28, H04W 36/00

(54) **TRANSFERRING DATA FLOWS FOR PDU SESSIONS AT 5GS TO EPS MOBILITY**
ÜBERTRAGEN VON DATENFLÜSSEN FÜR PDU-SITZUNGEN BEI 5GS AUF EPS-MOBILITÄT
TRANSFERT DE FLUX DE DONNÉES POUR LA MOBILITÉ DE SESSIONS DE PDU DEPUIS 5GS VERS EPS

(30) Priority: 25.12.2019 WO PCT/CN2019/128211
(43) Date of publication of application: 02.11.2022
(73) Proprietor: TELEFONAKTIEBOLAGET LM ERICSSON (PUBL), 164 83 Stockholm (SE)
(72) Inventor: GAN, Juying, Shanghai, 200335 (CN); LU, Yunjie, Shanghai, 200335 (CN); CHEN, Qian, 431 49 Mölndal (SE); HEDMAN, Peter, 252 50 Helsingborg (SE)
(74) Representative: Ericsson
(86) International application number: PCT/EP2020/087028
(87) International publication number: WO 2021/130114

(56) References cited:
- HUAWEI ET AL: "Number of EBIs", 3GPP DRAFT; S2-1912508, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, NV, USA; 20191118 - 20191122 22 November 2019 (2019-11-22), XP051828425, Retrieved from the Internet: URL:https://ftp.3gpp.org/Meetings_3GPP_SYN C/SA2/Docs/S2-1912508.zip [retrieved on 2019-11-22]
- ERICSSON ET AL: "Not supporting 15 EPS bearers at 5GS to EPS mobility", 3GPP DRAFT; S2-2002444, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Electronic Meeting; 20200224 - 20200227 29 February 2020 (2020-02-29), XP051857356, Retrieved from the Internet: URL:https://ftp.3gpp.org/tsg_sa/WG2_Arch/T SGS2_137e_Electronic/Docs/S2-2002444.zip [retrieved on 2020-02-29]

## Description

### Technical field

The present disclosure relates to mobility for a UE from 5GS to EPS, particularly if a target MME does not support 15 EPS bearers but more than 8 EBI values are assigned to one or more Protocol Data Unit (PDU) Sessions of the UE by a serving AMF.

### Background

The Third Generation Partnership Project (3GPP) New Radio (NR) specification provides for mobility from a Fifth Generation (5G) System (5GS) to an Evolved Packet System (EPS). Such mobility is provided through a transfer from a source Access and Mobility Management Function (AMF) in the 5G Core (5GC) of the 5GS and a target Mobility Management Entity (MME) in the Evolved Packet Core (EPC) of the EPS. In the 5GS, it is always assumed that 15 EBIs can be allocated for interworking with an EPS. However, supporting 15 EPS bearers is optional in the EPS. Thus, in some cases, the target MME will support 15 EPS bearers and, in other cases, the target MME will not support 15 EPS bearers. In other words, in some cases the target MME lacks the capability of supporting 15 EPS bearers. In SA2#136, the scenario that the target MME does not support 15 EPS bearers at 5GS to EPS mobility is addressed in S2-1912775 on 3GPP TS 23.501 (which is to be reflected in 23.501 v16.3.0).

### === Change introduced in S2-1912775====

In the case of mobility from 5GS to EPS, if the MME lacks certain capability, e.g. MME not supporting 15 EPS bearers, the 5GC shall not transfer the UE EPS bearers and/or EPS PDN connections that are not supported by the EPC network.

A similar issue is addressed in 3GPP TS29.274 v15.9.0 for mobility from a source MME to a target MME where the source MME supports 15 EPS bearers but the target MME does not. Per 3GPP TS29.274 v15.9.0, when the target MME does not support 15 EPS bearers (which in fact means that the target EPS supports only 8 EPS bearers), the source MME shall only transfer 8 EPS bearers (assigning only certain EPS Bearer Identity (EBI) values) to the target MME:

### === Excerpt from TS 29.274======

### Table 7.3.1-3: Bearer Context within MME/SGSN/AMF UE EPS PDN Connections within Forward Relocation Request

NOTE 3: The support of the 15 EPS Bearers shall be homogeneously supported within an MME Pool / SGW serving area. A source MME which supports the 15 EPS Bearers, shall know whether the target MME pool also supports that by local configuration. When the target MME is known to not support the 15 EPS Bearers, the source MME shall only transfer up to 8 EPS bearer contexts with the EBI value set between '5' and '15' to the target MME and shall delete EPS bearer(s) which are not transferred, and if the default bearer is to be deleted, the corresponding PDN connection(s) shall be deleted by the source MME.

### Table 7 3 6-3: Bearer Context within MME/SGSN/AMF UE EPS PDN Connections within Context Response

NOTE 4: The support of the 15 EPS Bearers shall be homogeneously supported within an MME Pool / SGW serving area. A source MME which supports the 15 EPS Bearers, shall know whether the target MME pool also supports that by local configuration. When the target MME is known to not support the 15 EPS Bearers, the source MME shall only transfer up to 8 EPS bearer contexts with the EBI value set between '5' and '15' to the target MME and shall delete EPS bearer(s) which are not transferred, and if the default bearer is to be deleted, the corresponding PDN connection(s) shall be deleted by the source MME.

In support of the scenario in which the target MME does not support 15 EPS bearers at 5GS to EPS mobility, it has been proposed that the serving Access and Mobility Management Function (AMF) provides a "non supported EBI list" to a corresponding Session Management Function (SMF) or virtual SMF (V-SMF). In SA2#136, S2-1912547 was discussed (but not agreed) and proposed the following text:

### == Text from S2-1912547 (not yet agreed)=====

....The provided target MME capability also includes an Indication on whether the EPS bearer ID extension is supported in EPS network. If EPS bearer ID extension is not supported, the AMF provides the non supported EBI list to V-SMF, the V-SMF notifies the target MME capability to PGW-C+SMF. The QoS flows associated with the non supported EBI are not expected to be transferred to EPS network.

Document by HUAWEI ET AL - 22 November 2019 "Number of EBIs", S2-1912122, vol. SA WG2, no. Reno, NV, USA; 20191118 - 20191122, XP051828425, discloses a method wherein AMF indicates whether the target EPS network support 15 EPS bearers to PGW_C+SMF and based on that indication the PGW-C+SMF determine whether the QoS flow associated with not supported EPS Bearer ID value shall not be transferred to EPS network and released at the 5GC side. It also discloses that if EPS bearer ID extension is not supported in EPS network, the AMF provides the non-supported EBI list to V-SMF.

### Problems with Existing Solutions

There currently exist certain challenge(s). It remains unclear at 5GS to EPS mobility how the 5GC ensures that no more than 8 mapped EPS bearers are transferred to the EPS if the target MME does not support 15 EPS bearers.

### Summary

The present invention is defined by the independent claims. Further embodiments are set forth in the dependent claims.

Certain aspects of the present disclosure and their embodiments may provide solutions to the aforementioned or other challenges. In some embodiments, at 5GS to EPS mobility (for a UE), if a target MME does not support 15 EPS bearers but more than 8 EBI values are assigned to one or more Protocol Data Unit (PDU) Sessions (of the UE) by a serving AMF, then:
1) the AMF determines which PDU Sessions and Quality of Service (QoS) Flows are not to be transferred to EPS;
2) the AMF releases the PDU Sessions if they're not transferred; and
3) Packet Data Network Gateway-Control Plane (PGW-C) and SMF release the QoS Flows if the mapped EPS bearers are not included in a Modify Bearer Request (e.g., indicating that the EPS bearers were not transferred to EPS).

In some embodiments, when the AMF receives a new EBI allocation request, and the AMF determines that an EBI value from range 5-15 should be used for the new request but there is no available value from range 5-15, if there is a value available from EBI range 1-4, the AMF may perform EBI replacement to replace the EBI value(s) for QoS Flows(s) from value(s) in range 5-15 with value(s) in range 1-4, and the SMF updates the UE and maybe the Next Generation Radio Access Network (NG-RAN) (i.e., the RAN of the 5GS) of the EBI replacement.

According to the invention, a method performed by an Access and Mobility Management Function, AMF, for transferring PDU sessions (and their associated QoS Flows) of a UE during a mobility procedure in which the UE is moved from a 5GS to an EPS is provided. The method comprises: determining that a target MME for the mobility procedure in the EPS supports a first number of EPS bearers (e.g., supports 8 EPS bearers) that is less than a second number of EPS bearer identities (EBIs) (e.g., 15 EBIs) assigned to a number of PDU sessions (and their associated QoS Flows) of the UE that are to be transferred from the 5GS to the EPS; determining which of the EBIs are not to be transferred to the target MME; and releasing or initiating release of the PDU sessions and/or QoS Flows for which the EBIs are determined not to be transferred to the target MME.

Certain embodiments may provide one or more of the following technical advantage(s). Certain embodiments address scenarios at 5GS to EPS mobility in which a target MME does not support 15 EPS bearers.

### Brief Description of the Drawings

The accompanying drawing figures incorporated in and forming a part of this specification illustrate several aspects of the disclosure, and together with the description serve to explain the principles of the disclosure.
Figure 1 illustrates one example of a cellular communications system in which embodiments of the present disclosure may be implemented;
Figure 2 illustrates a wireless communication system represented as a Fifth Generation (5G) network architecture composed of core Network Functions (NFs), where interaction between any two NFs is represented by a point-to-point reference point/interface;
Figure 3 illustrates a 5G network architecture using service-based interfaces between the NFs in the control plane, instead of the point-to-point reference points/interfaces used in the 5G network architecture of Figure 2;
Figure 4 illustrates a Long Term Evolution (LTE) network architecture;
Figure 5 is a schematic diagram of a 5G System (5GS) to Evolved Packet System (EPS) handover for single-registration mode with an N26 interface, excerpted from Figure 4.11.1.2.1-1 of Third Generation Partnership Project (3GPP) Technical Specification (TS) 23.502;
Figure 6 is a schematic diagram of 5GS to EPS idle mode mobility using an N26 interface, excerpted from Figure 4.11.1.3.2-1 of 3GPP TS 23.502;
Figure 7 is a flowchart illustrating a method implemented in a network node (e.g., an Access and Mobility Management Function (AMF)) for transferring Protocol Data Unit (PDU) sessions (and their associated Quality of Service (QoS) flows) of a User Equipment (UE) during a mobility procedure in which the UE is moved from a 5GS to an EPS is provided; and
Figures 8 through 10 are block diagrams of a network node according to some embodiments of the present disclosure.

### Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment (UE) device in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

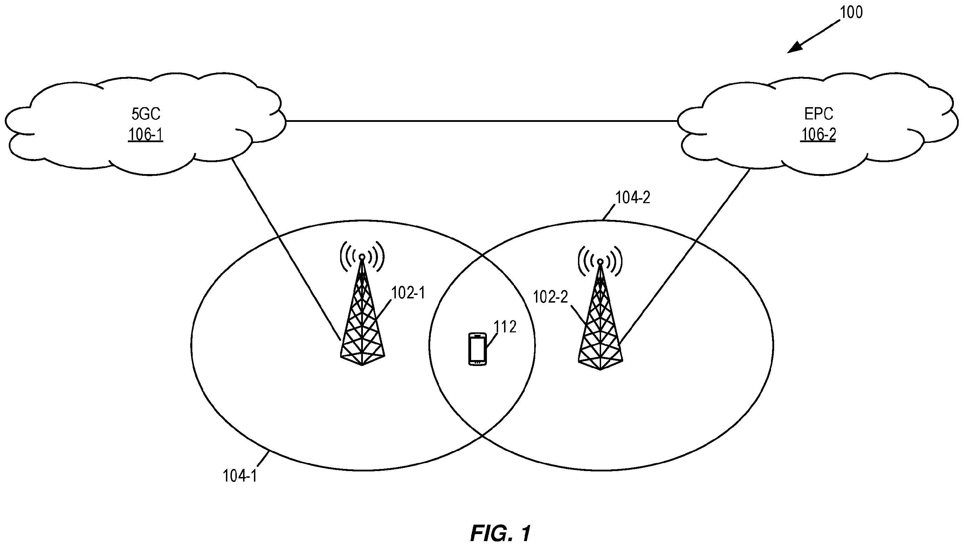

Figure 1 illustrates one example of a cellular communications system 100 in which embodiments of the present disclosure may be implemented. In the embodiments described herein, the cellular communications system 100 includes a 5G system (5GS) including a Next Generation Radio Access Network (NG-RAN) and an Evolved Packet System (EPS) including a LTE RAN (i.e., E-UTRA RAN). In this example, the NG-RAN includes one or more base stations 102-1, which in 5G NR are referred to as NG-RAN nodes (e.g., a gNBs or gn-eNBs for LTE RAN nodes connected to a 5G Core (5GC) 106-1), connected to the 5GC 106-1 and controlling corresponding (macro) cells 104-1. Together, the NG-RAN node(s) (e.g., 102-1) and the 5GC 106-1 form the 5GS. The E-UTRA RAN includes one or more base stations 102-2, which in LTE are referred to as E-UTRA RAN nodes (e.g., eNBs when connected to EPC), connected to an Evolved Packet Core (EPC) 106-2 and controlling corresponding (macro) cells 104-2. Together, the E-UTRA RAN node(s) (e.g., 102-2) and the EPC 106-2 form the EPS.

The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The base stations 102 provide service to one or more wireless communication devices 112 in the corresponding cells 104. The wireless communication devices 112are generally referred to herein collectively as wireless communication devices 112 and individually as wireless communication device 112. In the following description, the wireless communication devices 112 are oftentimes UEs, but the present disclosure is not limited thereto.

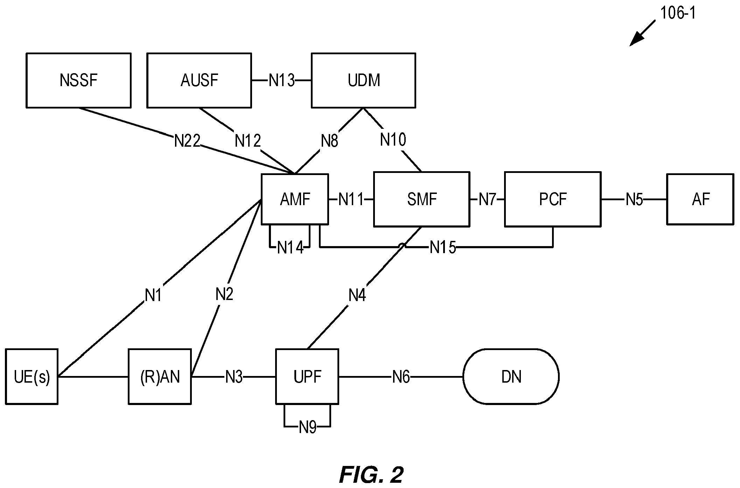

Figure 2 illustrates a wireless communication system represented as a 5G network architecture composed of core Network Functions (NFs), where interaction between any two NFs is represented by a point-to-point reference point/interface. Figure 2 can be viewed as one particular implementation of the 5GC 106-1 of the system 100 of Figure 1.

Seen from the access side the 5G network architecture shown in Figure 2 comprises a plurality of User Equipment (UEs) connected to either a RAN or an Access Network (AN) as well as an Access and Mobility Management Function (AMF). Typically, the (R)AN comprises base stations, e.g. such as evolved Node Bs (eNBs) or NR base stations (gNBs) or similar. Seen from the core network side, the 5G core NFs shown in Figure 2 include a Network Slice Selection Function (NSSF), an Authentication Server Function (AUSF), a Unified Data Management (UDM), an AMF, a Session Management Function (SMF), a Policy Control Function (PCF), and an Application Function (AF).

Reference point representations of the 5G network architecture are used to develop detailed call flows in the normative standardization. The N1 reference point is defined to carry signaling between the UE and AMF. The reference points for connecting between the AN and AMF and between the AN and UPF are defined as N2 and N3, respectively. There is a reference point, N11, between the AMF and SMF, which implies that the SMF is at least partly controlled by the AMF. N4 is used by the SMF and UPF so that the UPF can be set using the control signal generated by the SMF, and the UPF can report its state to the SMF. N9 is the reference point for the connection between different UPFs, and N14 is the reference point connecting between different AMFs, respectively. N15 and N7 are defined since the PCF applies policy to the AMF and SMF, respectively. N12 is required for the AMF to perform authentication of the UE. N8 and N10 are defined because the subscription data of the UE is required for the AMF and SMF.

The 5G core network aims at separating user plane and control plane. The user plane carries user traffic while the control plane carries signaling in the network. In Figure 2, the UPF is in the user plane and all other NFs, i.e., the AMF, SMF, PCF, AF, AUSF, and UDM, are in the control plane. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF and SMF are independent functions in the control plane. Separated AMF and SMF allow independent evolution and scaling. Other control plane functions like the PCF and AUSF can be separated as shown in Figure 2. Modularized function design enables the 5G core network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs.

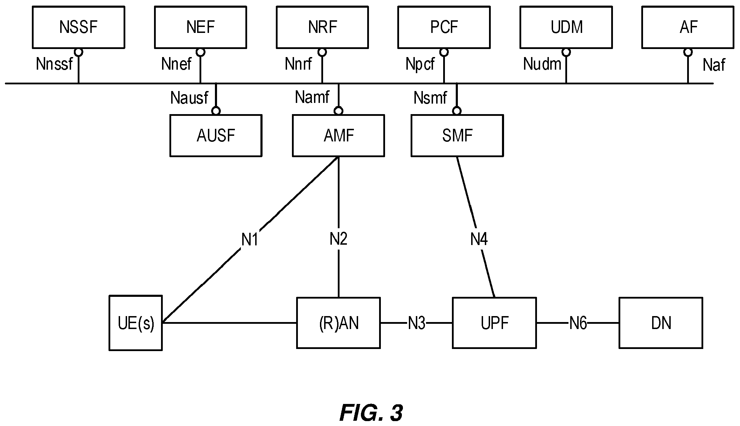

Figure 3 illustrates a 5G network architecture using service-based interfaces between the NFs in the control plane, instead of the point-to-point reference points/interfaces used in the 5G network architecture of Figure 2. However, the NFs described above with reference to Figure 2 correspond to the NFs shown in Figure 3. The service(s) etc. that a NF provides to other authorized NFs can be exposed to the authorized NFs through the service-based interface. In Figure 3 the service based interfaces are indicated by the letter "N" followed by the name of the NF, e.g. Namf for the service based interface of the AMF and Nsmf for the service based interface of the SMF etc. The Network Exposure Function (NEF) and the Network Function (NF) Repository Function (NRF) in Figure 3 are not shown in Figure 2 discussed above. However, it should be clarified that all NFs depicted in Figure 2 can interact with the NEF and the NRF of Figure 3 as necessary, though not explicitly indicated in Figure 2.

Some properties of the NFs shown in Figures 2 and 3 may be described in the following manner. The AMF provides UE-based authentication, authorization, mobility management, etc. A UE even using multiple access technologies is basically connected to a single AMF because the AMF is independent of the access technologies. The SMF is responsible for session management and allocates Internet Protocol (IP) addresses to UEs. It also selects and controls the UPF for data transfer. If a UE has multiple sessions, different SMFs may be allocated to each session to manage them individually and possibly provide different functionalities per session. The AF provides information on the packet flow to the PCF responsible for policy control in order to support Quality of Service (QoS). Based on the information, the PCF determines policies about mobility and session management to make the AMF and SMF operate properly. The AUSF supports authentication function for UEs or similar and thus stores data for authentication of UEs or similar while the UDM stores subscription data of the UE. The Data Network (DN), not part of the 5G core network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

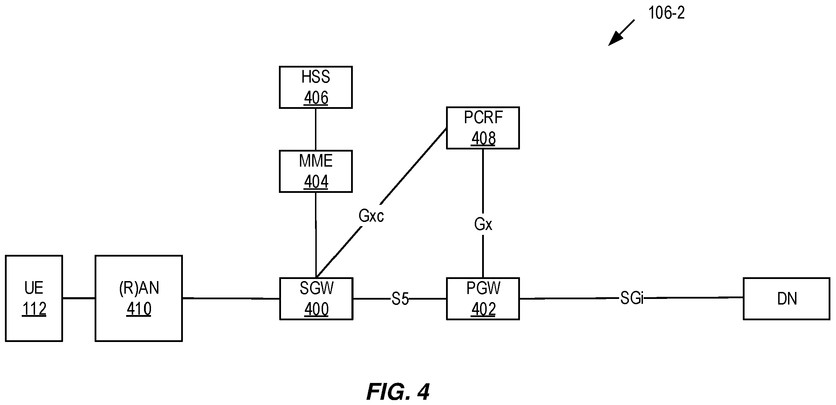

Figure 4 illustrates an LTE network architecture. Figure 4 can be viewed as one particular implementation of the EPC 106-2 of the system 100 of Figure 1. As will be appreciated by one of skill in the art, core network for LTE, which is referred to as an EPC, includes a number of core network entities such as, e.g., a Serving Gateway (S-GW) 400, a P-GW 402, an MME 404, a Home Subscriber Server (HSS) 406, and a Policy and Charging Rules Function (PCRF) 408. The operational details of the S-GW 400, the P-GW 402, the MME 404, the HSS 406, and the PCRF 408 are well known to those of skill in the art and therefore are not repeated here. (R)AN 410 of the LTE network includes base stations such as, e.g., eNBs.

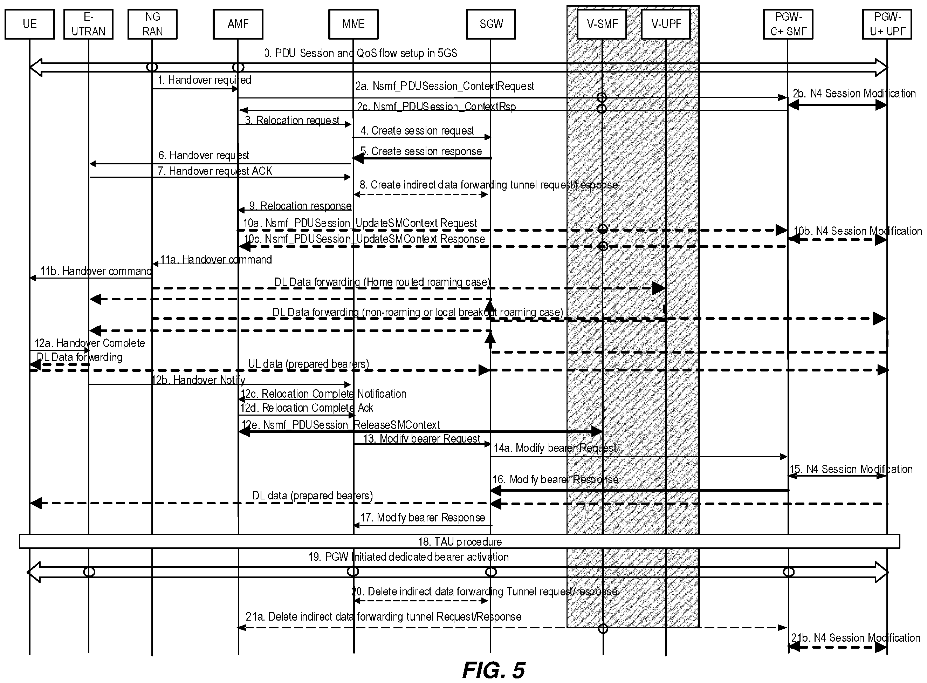

Figure 5 is a schematic diagram of a 5GS to EPS handover for single-registration mode with an N26 interface, excerpted from Figure 4.11.1.2.1-1 of 3GPP TS 23.502. Embodiments described herein facilitate mobility between a 5GS and an EPS, where a target MME does not support 15 EPS bearers (meaning that only 8 EPS bearers are supported). In an exemplary aspect, updates are made to 3GPP TS 23.502 clause 4.11.1.2.1 5GS to EPS handover using N26 interface as follows:

### 4.11.1.2.1 5GS to EPS handover using N26 interface

Figure 4.11.1.2.1-1 describes the handover procedure from 5GS to EPS when N26 is supported.

In the case of handover to a shared EPS network, the source NG-RAN determines a PLMN to be used in the target network as specified by TS 23.501 [2]. The source NG-RAN shall indicate the selected PLMN ID to be used in the target network to the AMF as part of the TAI sent in the HO Required message.

In the case of handover from a shared NG-RAN, the AMF may provide the MME with an indication that the 5GS PLMN is a preferred PLMN at later change of the UE to a 5GS shared networks.

During the handover procedure, as specified in clause 4.9.1.3.1, the source AMF shall reject any PGW-C+SMF initiated N2 request received since handover procedure started and shall include an indication that the request has been temporarily rejected due to handover procedure in progress.

Upon reception of a rejection for an PGW-C+SMF initiated N2 request(s) with an indication that the request has been temporarily rejected due to handover procedure in progress, the PGW-C+SMF behaves as specified in TS 23.401 [13].

The procedure involves a handover to EPC and setup of default EPS bearer and dedicated bearers for GBR QoS Flows in EPC in steps 1-16 and re-activation, if required, of dedicated EPS bearers for non-GBR QoS Flows in step 19. This procedure can be triggered, for example, due to new radio conditions, load balancing or in the presence of QoS Flow for normal voice or IMS emergency voice, the source NG-RAN node may trigger handover to EPC.

For Ethernet and Unstructured PDU Session Types, the PDN Type Ethernet and non-IP respectively are used, when supported, in EPS.

When EPS supports PDN Type non-IP but not PDN type Ethernet, PDN type non-IP is used also for Ethernet PDU sessions. The SMF shall also set the PDN Type of the EPS Bearer Context to non-IP in this case. After the handover to EPS, the PDN Connection will have PDN Type non-IP, but it shall be locally associated in UE and SMF to PDU Session Type Ethernet or Unstructured respectively.

In the roaming home routed case, the PGW-C+SMF always provides the EPS Bearer ID and the mapped QoS parameters to UE. The V-SMF caches the EPS Bearer ID and the mapped QoS parameters obtained from H-SMF for this PDU session. This also applies in the case that the HPLMN operates the interworking procedure without N26.

| | |
|---|---|
| NOTE 1: | The IP address preservation cannot be supported, if PGW-C+SMF in the HPLMN doesn't provide the mapped QoS parameters. |

1. NG-RAN decides that the UE should be handed over to the E-UTRAN. If NG-RAN is configured to perform Inter RAT mobility due to IMS voice fallback triggered by QoS flow setup and request to setup QoS flow for IMS voice was received, NG-RAN responds indicating rejection of the QoS flow establishment because of mobility due to fallback for IMS voice via N2 SM information and triggers handover to E-UTRAN. The NG-RAN sends a Handover Required (Target eNB ID, Direct Forwarding Path Availability, Source to Target Transparent Container, inter system handover indication) message to the AMF. NG-RAN indicates bearers corresponding to the 5G QoS Flows for data forwarding in Source to Target Transparent Container.
If the handover is triggered due to Emergency fallback, the NG-RAN may forward the Emergency indication to the target eNB in the Source to Target Transparent Container, and the target eNB allocates radio bearer resources taking received indication into account.
2. The AMF determines from the 'Target eNB Identifier' IE that the type of handover is Handover to E-UTRAN. The AMF selects an MME as described in TS 23.401 [13] clause 4.3.8.3.
In the case of HR roaming, the AMF by using Nsmf_PDUSession_Context Request requests the V-SMF to provide SM Context that also includes the mapped EPS Bearer Contexts. The AMF provides the target MME capability to SMF in the request to allow the V-SMF to determine whether to include EPS Bearer context for Ethernet PDN Type or non-IP PDN Type or not. For PDU Sessions with PDU Session Type Ethernet, if the UE and target MME supports Ethernet PDN type, the SMF provides SM Context for Ethernet PDN Type, otherwise if the target MME does not support Ethernet Type but support non-IP Type, the SMF provides SM Context for non-IP PDN Type. For PDU Sessions with PDU Session Type Unstructured, the SMF provides SM Context for non-IP PDN Type.
In the case of non roaming or LBO roaming, the AMF request PGW-C+SMF to provide SM Context by using Nsmf_PDUSession_ContextRequest. The AMF provides the target MME capability to PGW-C+SMF in the request to allow the PGW-C+SMF to determine whether to include EPS Bearer context for Ethernet Type or non-IP PDN Type or not. For PDU Sessions with PDU Session Type Ethernet, if the UE and target MME supports Ethernet PDN type, the SMF provides SM Context for Ethernet PDN Type, otherwise if the target MME does not support Ethernet but support non-IP PDN Type, the SMF provides SM Context for non-IP PDN Type. For PDU Sessions with PDU Session Type Unstructured, the SMF provides SM Context for non-IP PDN Type. The PGW-C+SMF send N4 Session modification to PGW-U+UPF to establish the CN tunnel for each EPS bearer and provide EPS Bearer Contexts to AMF, as described in step 8 of clause 4.11.1.4.1. The PGW-U+UPF is ready to receive the uplink packet from E-UTRAN.
If the AMF knows that the target MME does not support 15 EPS bearers, the AMF first marks EBI values in range 1-4 "not to be transferred" which means the QoS Flows associated with those EBIs are not to be transferred to EPS. If there are still more than 8 EBI values associated with PDU Sessions, the AMF then determines EBI value(s) not to be transferred based on S-NSSAI and ARP value(s). The AMF does not retrieve the SMF context for PDU Session(s) if the QoS Flow associated with the default QoS Rule is determined not to be transferred.

| | |
|---|---|
| NOTE x: | For a PDU Session, if some QoS Flows are to be transferred while others are not, the AMF can determine if the QoS Flow associated with the default QoS Rule is to be transferred based on the ARP PL and PVI value. |

This step is performed with all the PGW-C+SMFs corresponding to PDU Sessions of the UE which are associated with 3GPP access and have EBI(s) allocated to them.

| | |
|---|---|
| NOTE 2: | The AMF knows the MME capability to support 15 EPS bearers, Ethernet PDN type and/or non-IP PDN type or not through local configuration. |
| NOTE 3: | In home routed roaming scenario, the UE's SM EPS Contexts are obtained from the V-SMF. |

3. The AMF sends a Forward Relocation Request as in Step 2 in clause 5.5.1.2.2 (S1-based handover, normal) in TS 23.401 [13], with the following modifications and clarifications:
- Parameter "Return preferred" may be included. Return preferred is an optional indication by the MME of a preferred return of the UE to the 5GS PLMN at a later access change to a 5GS shared network. An MME may use this information as specified by TS 23.501 [2].
- The SGW address and TEID for both the control-plane or EPS bearers in the message are such that target MME selects a new SGW. The AMF determines, based on configuration and the Direct Forwarding Path Availability, if indirection forwarding is possible and includes the Direct Forwarding Flag to inform the target MME whether direct data forwarding is applicable.
The AMF includes the mapped SM EPS UE Contexts for PDU Sessions with and without active UP connections.
4-5. Step 4 and 4a respectively in clause 5.5.1.2.2 (S1-based handover, normal) in TS 23.401 [13].
6. Step 5 (Handover Request) in clause 5.5.1.2.2 (S1-based handover, normal) in TS 23.401 [13] with the following modification:
- Handover Request may contain information Handover Restriction List with information about PLMN IDs as specified by TS 23.251 [35], clause 5.2a for eNodeB functions.
- The target eNB should establish E-RABs indicated by the list of EPS bearer to be setup provided by the MME, even if they are not included in the source to target container.

7-9. Step 5a through 7 in clause 5.5.1.2.2 (S1-based handover, normal) in TS 23.401 [13].
10a. If indirect data forwarding applies, the AMF sends the Nsmf_PDUSession_UpdateSMContext Request (Serving GW Address(es) and Serving GW DL TEID(s) for data forwarding) to the PGW-C+SMF, for creating indirect data forwarding tunnel. If multiple PGW-C+SMFs serves the UE, the AMF maps the EPS bearers for Data forwarding to the PGW-C+SMF address(es) based on the association between the EPS bearer ID(s) and PDU Session ID(s). In home-routed roaming case, the AMF requests the V-SMF to create indirect forwarding tunnel.
10b. The PGW-C+SMF may select an intermediate PGW-U+UPF for data forwarding. The PGW-C+SMF maps the EPS bearers for Data forwarding to the 5G QoS flows based on the association between the EPS bearer ID(s) and QFI(s) for the QoS flow(s) in the PGW-C+SMF, and then sends the QFIs, Serving GW Address(es) and TEID(s) for data forwarding to the PGW-U+UPF. If CN Tunnel Info for Data Forwarding is allocated by the PGW-C+SMF, the CN Tunnel Info for Data Forwarding is provided to PGW-U+UPF in this step. The PGW-U+UPF acknowledges by sending a response. If CN Tunnel Info is allocated by the PGW-U+UPF, the CN Tunnel Info is provided to PGW-C+SMF in this response. In home-routed roaming case, the V-SMF selects the V-UPF for data forwarding.
10c. The PGW-C+SMF returns an Nsmf PDUSession_UpdateSMContext Response (Cause, CN tunnel Info for Data Forwarding, QoS flows for Data Forwarding) for creating indirect data forwarding. Based on the correlation between QFI(s) and Serving GW Address(es) and TEID(s) for data forwarding, the PGW-U+UPF maps the QoS flow(s) into the data forwarding tunnel(s) in EPC.
11. The AMF sends the Handover Command to the source NG-RAN (Transparent container (radio aspect parameters that the target eNB has set-up in the preparation phase), CN tunnel info for data forwarding per PDU Session, QoS flows for Data Forwarding). The source NG-RAN commands the UE to handover to the target access network by sending the HO Command. The UE correlates the ongoing QoS Flows with the indicated EPS Bearer IDs to be setup in the HO command. The UE locally deletes the PDU Session if the QoS Flow associated with the default QoS rule in the PDU Session does not have an EPS Bearer ID assigned. If the QoS Flow associated with the default QoS rule has an EPS Bearer ID assigned, the UE keeps the PDU Session (PDN connection) and for the remaining QoS Flow(s) that do not have EPS bearer ID(s) assigned, the UE locally deletes the QoS rule(s) and the QoS Flow level QoS parameters if any associated with those QoS Flow(s) and notifies the impacted applications that the dedicated QoS resource has been released. The UE deletes any UE derived QoS rules. The EPS Bearer ID that was assigned for the QoS flow of the default QoS rule in the PDU Session becomes the EPS Bearer ID of the default bearer in the corresponding PDN connection. For the QoS Flows indicated in the "QoS Flows for Data Forwarding", NG-RAN initiate data forwarding via to the PGW-U+UPF based on the CN Tunnel Info for Data Forwarding per PDU Session. Then the PGW-U+UPF maps data received from the data forwarding tunnel(s) in the 5GS to the data forwarding tunnel(s) in EPS, and sends the data to the target eNodeB via the Serving GW.
12-12c. Step 13 to step 14 from clause 5.5.1.2.2 (S1-based handover, normal) in TS 23.401 [13] with the following clarification:
- The AMF request the release of the PDU Session which is associated with 3GPP access, not expected to be transferred to EPC i.e. PDU Session with no EBI(s) allocated to them or PDU Session with EBI(s) marked as "not to be transferred", and the corresponding (V-)SMF is not contacted by AMF for SM context at step 2a; or PDU Session with the SM context retrieval failed at step 2c.

12d. The AMF acknowledges MME with Relocation Complete Ack message. A timer in AMF is started to supervise when resource in NG-RAN shall be released.
12e. In case of home routed roaming, the AMF invokes Nsmf PDUSession_ReleaseSMContext Request(V-SMF only indication) to the V-SMF. This service operation request the V-SMF to remove only the SM context in V-SMF, i.e. not release PDU Session context in the PGW-C+SMF.
If indirect forwarding tunnel(s) were previously established, the V-SMF starts a timer and releases the SM context on expiry of the timer. If no indirect forwarding tunnel has been established, the V-SMF immediately releases the SM context and its UP resources for this PDU Session in V-UPF locally.
13. Step 15 from clause 5.5.1.2.2 (S1-based handover, normal) in TS 23.401 [13].
14a. Step 16 (Modify Bearer Request) from clause 5.5.1.2.2 (S1-based handover, normal) in TS 23.401 [13] with the following clarification:
- The PGW-C+SMF deletes the PDU Session if the QoS Flow associated with the default QoS rule in the PDU Session does not have an EPS Bearer ID assigned. If the QoS Flow associated with the default QoS rule has an EPS Bearer ID assigned, the PGW-C+SMF keeps the PDU Session (PDN connection) and for the remaining QoS Flows that do not have EPS bearer ID(s) assigned, the PGW-C+SMF deletes the PCC rule(s) associated with those QoS Flows and informs the PCF about the removed PCC rule(s). If the mapped EPS bearers are not included in Modify Bearer Request, PGW-C+SMF deletes the PCC rule(s) associated with the QoS Flows corresponding to those mapped EPS bearers.

| | |
|---|---|
| NOTE 4: | If the QoS flow is deleted, the IP flows of the deleted QoS rules will continue flowing on the default EPS bearer if it does not have an assigned TFT. If the default EPS bearer has an assigned TFT, the IP flows of the deleted QoS Flow may be interrupted until step 19 when dedicated bearer activation is triggered by a request from the PCF. |

The PGW-C+SMF may need to report some subscribed event to the PCF by performing an SMF initiated SM Policy Association Modification procedure as defined in clause 4.16.5.
15. The PGW-C+SMF initiates a N4 Session Modification procedure towards the UPF+PGW-U to update the User Plane path, i.e. the downlink User Plane for the indicated PDU Session is switched to E-UTRAN. The PGW-C+SMF releases the resource of the CN tunnel for PDU Session in UPF+PGW-U.
16. Step 16a (Modify Bearer Response) from clause 5.5.1.2.2 (S1-based handover, normal) in TS 23.401 [13]. At this stage the User Plane path is established for the default bearer and the dedicated EPS bearers between the UE, target eNodeB, Serving GW and the PGW-U+UPF. The PGW-C+SMF uses the EPS QoS parameters as assigned for the dedicated EPS bearers during the QoS Flow establishment. PGW-C+SMF maps all the other IP flows to the default EPS bearer (see NOTE 4).
If indirect forwarding tunnel(s) were previously established, the PGW-C+SMF starts a timer, to be used to release the resource used for indirect data forwarding.
17. Step 17 from clause 5.5.1.2.2 (S1-based handover, normal) in TS 23.401 [13].
18. The UE initiates a Tracking Area Update procedure as specified in step 11 of clause 5.5.1.2.2 (S1-based handover, normal) in TS 23.401 [13].
This includes the deregistration of the old AMF for 3GPP access from the HSS+UDM as specified in clause 4.11.1.5.3. Any registration associated with the non-3GPP access in the old AMF is not removed (i.e. an AMF that was serving the UE over both 3GPP and non-3GPP accesses does not consider the UE as deregistered over non 3GPP access and will remain registered and subscribed to subscription data updates in UDM).
   NOTE 5: The behavior whereby the HSS+UDM cancels location of CN node of the another type, i.e. AMF, is similar to HSS behavior for MME and Gn/Gp SGSN registration (see TS 23.401 [13]). The target AMF that receives the cancel location from the HSS+UDM is the one associated with 3GPP access.
When the UE decides to deregister over non-3GPP access or the old AMF decides not to maintain a UE registration for non-3GPP access anymore, the old AMF then deregisters from UDM by sending a Nudm_UECM_Deregistration service operation, unsubscribes from Subscription Data updates by sending an Nudm_SDM_Unsubscribe service operation to UDM and releases all the AMF and AN resources related to the UE.

19. If PCC is deployed, the PCF may decide to provide the previously removed PCC rules to the PGW-C+SMF again thus triggering the PGW-C+SMF to initiate dedicated bearer activation procedure. This procedure is specified in TS 23.401 [13], clause 5.4.1 with modification captured in clause 4.11.1.5.4. This step is applicable for PDN Type IP or Ethernet, but not for non-IP PDN Type.
20. Step 21 from clause 5.5.1.2.2 (S1-based handover, normal) in TS 23.401 [13].
21. In the case of home routed roaming, at the expiry of the timer at V-SMF started at step 12e, the V-SMF locally releases the SM context and the UP resource for the PDU Session including the resources used for indirect forwarding tunnel(s) that were allocated at step 10.
In non-roaming or local breakout roaming, if PGW-C+SMF has started a timer in step 16, at the expiry of the timer, the PGW-C+SMF sends N4 Session Modification Request to PGW-U+UPF to release the resources used for the indirect forwarding tunnel(s) that were allocated at step 10. When the timer set in step 12d expires, AMF also sends a UE Context Release Command message to the source NG RAN. The source NG RAN releases its resources related to the UE and responds with a UE Context Release Complete message.

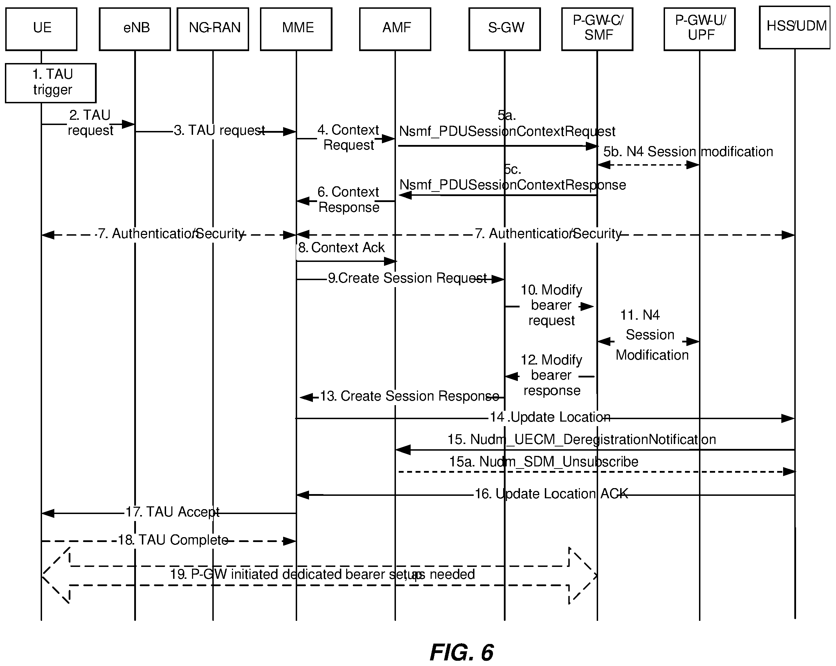

Figure 6 is a schematic diagram of 5GS to EPS idle mode mobility using an N26 interface, excerpted from Figure 4.11.1.3.2-1 of 3GPP TS 23.502. In another exemplary aspect, updates are made to 3GPP TS 23.502 clause 4.11.1.3.2 5GS to EPS Idle mode mobility using N26 interface as follows:

### 4.11.1.3.2 5GS to EPS Idle mode mobility using N26 interface

In case of network sharing the UE selects the target PLMN ID according to clause 5.18.3 of TS 23.501 [2].

Clause 4.11.1.3.2 covers the case of idle mode mobility from 5GC to EPC. UE performs Tracking Area Update procedure in E-UTRA/EPS when it moves from NG-RAN/5GS to E-UTRA/EPS coverage area.

The procedure involves a Tracking Area Update to EPC and setup of default EPS bearer and dedicated bearers in EPC in steps 1-11 and re-activation, if required.

The TAU procedure in TS 23.401 [13] is used with the following 5GS interaction:
1. Step 1 from clause 5.3.3.1 (Tracking Area Update procedure with Serving GW change) in TS 23.401 [13].
2. Step 2 from clause 5.3.3.1 (Tracking Area Update procedure with Serving GW change) in TS 23.401 [13] with the modification captured in clause 4.11.1.5.3.
3-4. Steps 3-4 from clause 5.3.3.1 (Tracking Area Update procedure with Serving GW change) in TS 23.401 [13].
5a. The AMF verifies the integrity of the TAU request message and requests the PGW-C+SMF to provide SM Context by using Nsmf_PDUSession_ContextRequest that also includes the mapped EPS Bearer Contexts. The AMF provides the target MME capability to SMF in the request to allow the SMF to determine whether to include EPS Bearer context for Ethernet PDN type or non-IP PDN Type or not.
If the AMF knows that the target MME does not support 15 EPS bearers, the AMF first marks EBI values in range 1-4 "not to be transferred" which means the QoS Flows associated with those EBIs are not to be transferred to EPS. If there are still more than 8 EBI values associated with PDU Sessions, the AMF then determines EBI value(s) not to be transferred based on S-NSSAI and ARP value(s). The AMF does not retrieve the SMF context for PDU Session(s) if the QoS Flow associated with the default QoS Rule is determined not to be transferred.

| | |
|---|---|
| NOTE x: | For a PDU Session, if some QoS Flows are to be transferred while others are not, the AMF can determine if the QoS Flow associated with the default QoS Rule is to be transferred based on the ARP PL and PVI value. |

This step is performed with all the PGW-C+SMFs corresponding to PDU Sessions of the UE which are associated with 3GPP access and have EBI(s) allocated to them. In this step, if the AMF correctly validates the UE, then the AMF starts a timer.

| | |
|---|---|
| NOTE 1: | The AMF knows the MME capability to support 15 EPS bearers, Ethernet PDN Type and/or non-IP PDN type or not through local configuration. |

5b. For Non-roaming or roaming with local breakout scenario, if CN Tunnel Info is allocated by the PGW-U+UPF, the SMF sends N4 Session Modification Request to PGW-U+UPF to establish the tunnel for each EPS bearers, and PGW-U+UPF provides the PGW-U Tunnel Info for each EPS bearers to PGW-C+SMF.

| | |
|---|---|
| NOTE 2: | In home routed roaming case, the CN Tunnel Info for each EPS bearer has been prepared by the PGW-C+SMF and provided to the V-SMF as specified in clause 4.11.1.4.1. |

5c. For PDU Sessions that are anchored a UPF, the SMF returns mapped EPS bearer contexts, which includes PGW-C control plane tunnel information of the PDN connection corresponding to the PDU session, EBI for each EPS bearer, PGW-U tunnel information for each EPS bearer, and EPS QoS parameters for each EPS bearer. For PDU Sessions with PDU Session Type Ethernet, if the UE and target MME supports Ethernet PDN type, the SMF provides SM Context for Ethernet PDN Type, otherwise if the UE or target MME does not support Ethernet Type but support non-IP Type, the SMF provides SM Context for non-IP PDN Type. For PDU Sessions with PDU Session Type Unstructured, the SMF provides SM Context for non-IP PDN Type.
For PDU Sessions that are anchored at an NEF, the SMF returns an SCEF+NEF ID and an EBI for each PDN connection corresponding to a PDU Session.
If the PGW-C+SMF has marked that the status of one or more QoS Flows are deleted in the 5GC but not synchronized with the UE yet according to clause 4.3.3.2, the PGW-C+SMF does not return to the AMF the EPS context(s) if all its associated QoS Flows are marked as deleted, that is, the PGW-C+SMF returns to the AMF the EPS bearer contexts mapped from QoS Flows where at least one of the QoS Flow for the EPS bearer is not marked as deleted.

6. The AMF responds with a Context Response message carrying mapped MM context (including mapped security context), Return preferred and SM EPS UE Context (default and dedicated GBR bearers) to the MME. If the verification of the integrity protection fails, the AMF returns an appropriate error cause. Return preferred is an optional indication by the AMF of a preferred return of the UE to the 5GS PLMN at a later access change to a 5GS shared network. The AMF may start an implementation specific (guard) timer for the UE context.
From the received context and the Tracking Area indicated by the RAN, the MME can determine whether the UE is performing Inter-RAT mobility to or from NB-IoT.
7 - 14.Steps 6-12 from clause 5.3.3.1 (Tracking Area Update procedure with Serving GW change) in TS 23.401 [13] are performed with following addition and modification:
In the step 10, if the QoS Flow associated with the default QoS rule has an EPS Bearer ID assigned, the PGW-C+SMF keeps the PDU Session (PDN connection) and for the remaining QoS Flows that do not have EPS bearer ID(s) assigned, the PGW-C+SMF deletes the PCC rule(s) associated with those QoS Flows and informs the PCF about the removed PCC rule(s).
In the step 11, the PGW-C+SMF requests the PGW-U+UPF to establish the tunnel for each EPS bearer by providing SGW-U Tunnel Info, and PGW-U Tunnel Info if the PGW-U Tunnel Info is allocated by the PGW-C+SMF. If the DL data is buffered in the PGW-C+SMF, the PGW-C+SMF forwards the buffered data to the PGW-U+UPF and the data is delivered to S-GW. If the DL data is buffered in the PGW-U+UPF, the data is delivered to the S-GW.
In step 10, the PGW-C+SMF may need to report some subscribed event to the PCF by performing an SMF initiated SM Policy Association Modification procedure as defined in clause 4.16.5. Step 9a from clause 5.3.3.1 (Tracking Area Update procedure with Serving GW change) in TS 23.401 [13] with the modification captured in clause 4.11.1.5.3
If the SCEF connection is to be established, the steps 9-13 are replaced with the steps 2-3 from clause 5.13.1.2 of TS 23.682 [23]. The SCEF+NEF ID and the EBI received from the AMF are included in the Create SCEF Connection Request.

15a. The HSS+UDM invokes Nudm_UECM_DeregistrationNotification to notify the AMF associated with 3GPP access with reason as 5GS to EPS Mobility. If the timer started in step 6 is not running, the old AMF removes the UE context. Otherwise, the AMF may remove UE context when the timer expires. The AMF request the release of the PDU Session which is associated with 3GPP access, not expected to be transferred to EPC, i.e. no EBI(s) allocated to them and corresponding to the (V-)SMF which is not contacted by AMF for SM context at step 5a, or SM context retrieval failure at step 5c. The AMF requests the release of the SM context in the V-SMF only, for Home Routed PDU Session with EBIs allocated. The 5GC may also keep UE context to allow the use of native security parameters when UE moves back from EPS to 5GS later.
Registration associated with the non-3GPP access in the AMF is not removed (i.e. an AMF that was serving the UE over both 3GPP and non-3GPP accesses does not consider the UE as deregistered over non 3GPP access and will remain registered and subscribed to subscription data updates in UDM).
When the UE decides to deregister over non-3GPP access or the old AMF decides not to maintain a UE registration for non-3GPP access anymore, the old AMF then deregisters from UDM by sending a Nudm_UECM_Deregistration service operation, unsubscribes from Subscription Data updates by sending an Nudm_SDM_Unsubscribe service operation to UDM and releases all the AMF and AN resources related to the UE.

16 - 18. Steps 17-21 from clause 5.3.3.1 (Tracking Area Update procedure with Serving GW change) in TS 23.401 [13] with the following modification:
The MME may provide the eNodeB with a PLMN list in the Handover Restriction List taking into account the last used 5GS PLMN ID and the Return preferred indication. The Handover Restriction List contains a list of PLMN IDs as specified by TS 23.251 [35] clause 5.2a for eNodeB functions.
The MME may not release the signaling connection with the UE based on the indication received in the step 1 that the UE is moving from 5GC.
If the mapped EPS bearers are not included in Modify Bearer Request, PGW-C+SMF deletes the PCC rule(s) associated with the QoS Flows corresponding to those mapped EPS bearers.

19. [conditional] Step 19 from clause 4.11.1.2.1 applies.
If some of the QoS Flow(s) for an EPS bearer were marked as deleted, the PGW-C+SMF may initiate bearer modification as specified in clause 5.4.3 of TS 23.401 [13] to remove the TFT filter(s) corresponding to the Packet Filter Set(s) in the QoS rules.

In an alternative aspect, the AMF can indicate "EBI replacement". In this alternative, a new subclause 4.11.1.4.4 is proposed as follows:
*4.11.1.4 Procedures for EPS bearer ID allocation*
...
*4.11.1.4.x EPS bearer ID replacement*

Following procedures are updated to revoke the EPS bearer ID(s) assigned to the QoS Flow(s):
- UE requested PDU Session Establishment (Non-roaming and Roaming with Local Breakout (clause 4.3.2.2.1) including Request Types "Initial Request" and "Existing PDU Session".
- UE requested PDU Session Establishment (Home-routed Roaming (clause 4.3.2.2.2) including Request Types "Initial Request" and "Existing PDU Session".
- UE or network requested PDU Session Modification (non-roaming and roaming with local breakout) (clause 4.3.3.2).
- UE or network requested PDU Session Modification (home-routed roaming) (clause 4.3.3.3).

When the AMF receives a new EBI allocation request, and the AMF determines that EBI value from range 5-15 should be used for the new request but there is no available value from range 5-15, if there is value available from EBI range 1-4, the AMF may perform EBI replacement to replace the EBI value(s) for QoS Flows(s) from value(s) in range 5-15 with value(s) in range 1-4, and the SMF needs to update the UE and maybe NG-RAN of the EBI replacement.

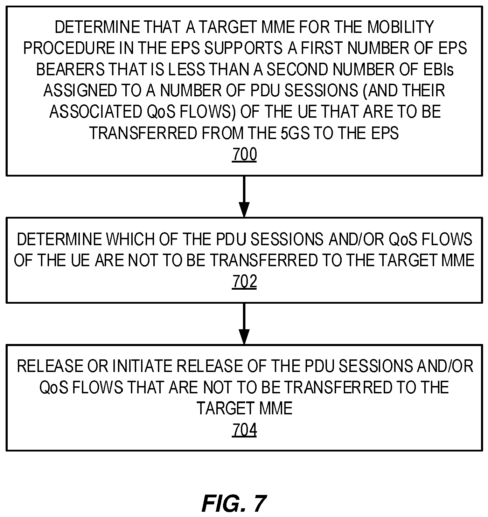

Figure 7 is a flowchart illustrating a method implemented in a network node (e.g., an AMF) for transferring PDU sessions (and their associated QoS Flows) of a UE during a mobility procedure in which the UE is moved from a 5GS to an EPS is provided. This process includes at least some aspects of at least some of the embodiments described above. The method comprises one or more of the steps illustrated in Figure 7. As illustrated, the network node determines that a target MME for the mobility procedure in the EPS supports a first number of EPS bearers (e.g., supports 8 EPS bearers) that is less than a second number of EPS bearer identities (EBIs) (e.g., 15 EBIs) assigned to a number of PDU sessions (and their associated QoS Flows) of the UE that are to be transferred from the 5GS to the EPS, as described above (step 700). The network node also determines which of the PDU sessions and/or which of the associated QoS Flows of the UE are not to be transferred to the target MME, as described above (step 702). Again, any of the embodiments described above relating to how this determination is made may be used. The network node releases or initiates release of the PDU sessions and/or QoS Flows that are not to be transferred to the target MME, as described above (704).

It should be understood that the steps of the method illustrated in Figure 7 may be implemented in the 5GS to EPS handover procedure described above with respect to Figure 5 and/or the EPS idle mode mobility procedure described above with respect to Figure 6. For example, step 700 and 702 may be implemented at step 2 of Figure 5 (e.g., thereby incorporating some or all aspects of the additions to 3GPP TS 23.502 clause 4.11.1.2.1 show above in relation to step 2 of Figure 4.11.1.2.1-1) and/or step 5a of Figure 6 (e.g., thereby incorporating some or all aspects of the additions to 3GPP TS 23.502 clause 4.11.1.3.2 show above in relation to step 5a of 4.11.1.3.2-1). Step 704 may be implemented at step 12a-12c of Figure 5 (e.g., thereby incorporating some or all aspects of the additions to 3GPP TS 23.502 clause 4.11.1.2.1 show above in relation to steps 12a-12c of Figure 4.11.1.2.1-1) and/or step 15a of Figure 6 (e.g., thereby incorporating some or all aspects of the additions to 3GPP TS 23.502 clause 4.11.1.3.2 show above in relation to step 15a of 4.11.1.3.2-1). In addition, the AMF may perform some or all of the additional aspects described above with respect to steps 13-14a of Figure 5 and/or steps 16-18 of Figure 6.

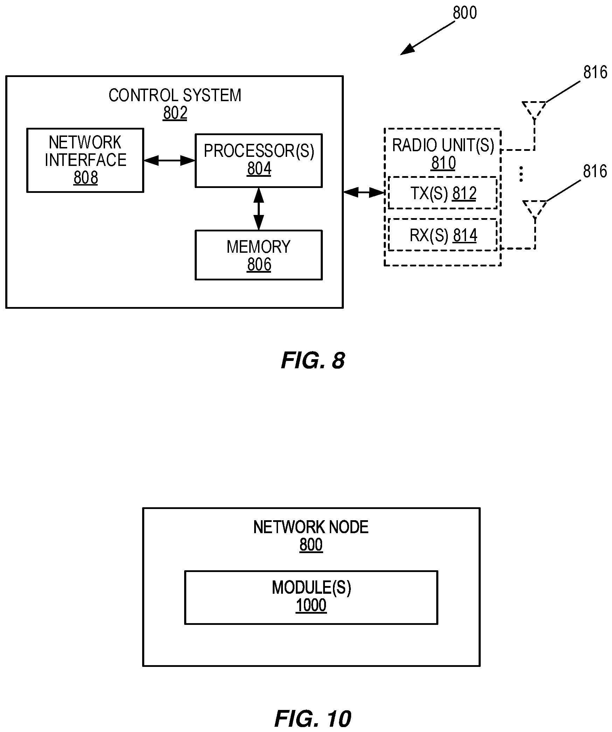

Figure 8 is a schematic block diagram of a network node 800 according to some embodiments of the present disclosure. Optional features are represented by dashed boxes. The network node 800 may be, for example, a core network node (e.g., a MME), a network node that implements a core network function (e.g., an AMF), or a radio access node (e.g., the base station 102-1 or 102-2) that implements all or part of the functionality of a network node (e.g., a NG-RAN base station, a E-UTRAN base station, a MME, an AMF, an SMF, etc.) described herein. As illustrated, the network node 800 includes a control system 802 that includes one or more processors 804 (e.g., Central Processing Units (CPUs), Application Specific Integrated Circuits (ASICs), Field Programmable Gate Arrays (FPGAs), and/or the like), memory 806, and a network interface 808. The one or more processors 804 are also referred to herein as processing circuitry. In addition, if the network node 800 is a radio access node, the network node 800 may further include one or more radio units 810 that each includes one or more transmitters 812 and one or more receivers 814 coupled to one or more antennas 816. The radio units 810 may be referred to or be part of radio interface circuitry. In some embodiments, the radio unit(s) 810 is external to the control system 802 and connected to the control system 802 via, e.g., a wired connection (e.g., an optical cable). However, in some other embodiments, the radio unit(s) 810 and potentially the antenna(s) 816 are integrated together with the control system 802. The one or more processors 804 operate to provide one or more functions of the network node 800 as described herein (e.g., one or more functions of a NG-RAN base station, a E-UTRAN base station, a MME, an AMF, an SMF, etc. described herein, e.g., with respect to Figures 5-6). In some embodiments, the function(s) are implemented in software that is stored, e.g., in the memory 806 and executed by the one or more processors 804.

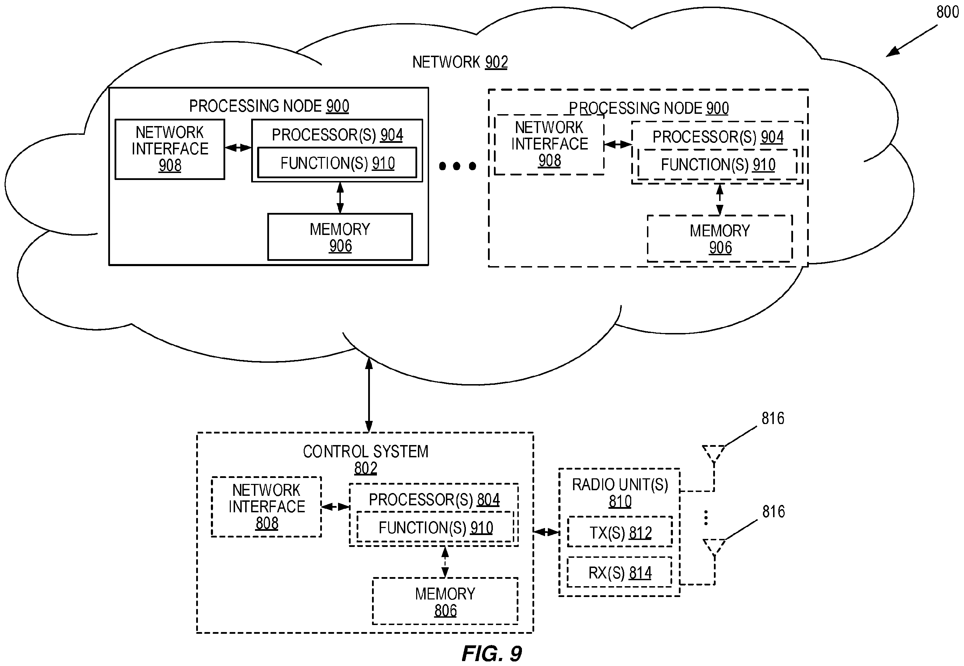

Figure 9 is a schematic block diagram that illustrates a virtualized embodiment of the network node 800 according to some embodiments of the present disclosure. As used herein, a "virtualized" network node is an implementation of the network node 800 in which at least a portion of the functionality of the network node 800 is implemented as a virtual component(s) (e.g., via a virtual machine(s) executing on a physical processing node(s) in a network(s)). As illustrated, in this example, the radio access node 800 includes one or more processing nodes 900 coupled to or included as part of a network(s) 902. Each processing node 900 includes one or more processors 904 (e.g., CPUs, ASICs, FPGAs, and/or the like), memory 906, and a network interface 908. If the network node 800 is a radio access node, the network node 800 may also include the control system 802 and/or the one or more radio units 810, as described above. The control system 802 may be connected to the radio unit(s) 810 via, for example, an optical cable or the like. If present, the control system 802 or the radio unit(s) are connected to the processing node(s) 900 via the network 902.

In this example, functions 910 of the network node 800 described herein (e.g., one or more functions of a NG-RAN base station, a E-UTRAN base station, a MME, an AMF, an SMF, etc. described herein, e.g., with respect to Figures 5-6) are implemented at the one or more processing nodes 900 or distributed across the one or more processing nodes 900 and the control system 802 and/or the radio unit(s) 810 in any desired manner. In some particular embodiments, some or all of the functions 910 of the network node 800 described herein are implemented as virtual components executed by one or more virtual machines implemented in a virtual environment(s) hosted by the processing node(s) 900. As will be appreciated by one of ordinary skill in the art, additional signaling or communication between the processing node(s) 900 and the control system 802 is used in order to carry out at least some of the desired functions 910. Notably, in some embodiments, the control system 802 may not be included, in which case the radio unit(s) 810 communicate directly with the processing node(s) 900 via an appropriate network interface(s).

In some embodiments, a computer program including instructions which, when executed by at least one processor, causes the at least one processor to carry out the functionality of the network node 800 or a node (e.g., a processing node 900) implementing one or more of the functions 910 of the network node 800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 10 is a schematic block diagram of the network node 800 according to some other embodiments of the present disclosure. The network node 800 includes one or more modules 1000, each of which is implemented in software. The module(s) 1000 provide the functionality of the network node 800 described herein (e.g., one or more functions of a NG-RAN base station, a E-UTRAN base station, a MME, an AMF, an SMF, etc. described herein, e.g., with respect to Figures 5-6). This discussion is equally applicable to the processing node 900 of Figure 9 where the modules 1000 may be implemented at one of the processing nodes 900 or distributed across multiple processing nodes 900 and/or distributed across the processing node(s) 900 and the control system 802.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 1x RTT | CDMA2000 1x Radio Transmission Technology |
| • 2G | Second Generation |
| • 3G | Third Generation |
| • 3GPP | Third Generation Partnership Project |
| • 4G | Fourth Generation |
| • 5G | Fifth Generation |
| • 5GC | Fifth Generation Core |
| • 5GS | Fifth Generation System |
| • ABS | Almost Blank Subframe |
| • AC | Alternating Current |
| • AF | Application Function |
| • AMF | Access and Mobility Management Function |
| • AN | Access Network |
| • AP | Access Point |
| • ARP | Allocation and Retention Priority |
| • ARQ | Automatic Repeat Request |
| • ASIC | Application Specific Integrated Circuit |
| • ATM | Asynchronous Transfer Mode |
| • AUSF | Authentication Server Function |
| • AWGN | Additive White Gaussian Noise |
| • BCCH | Broadcast Control Channel |
| • BCH | Broadcast Channel |
| • BS | Base Station |
| • BSC | Base Station Controller |
| • BTS | Base Transceiver Station |
| • BW | Bandwidth |
| • BWP | Bandwidth Part |
| • CA | Carrier Aggregation |
| • CC | Component Carrier |
| • CCCH | Common Control Channel |
| • CD | Compact Disk |
| • CDMA | Code Division Multiple Access |
| • CGI | Cell Global Identifier |
| • CIR | Channel Impulse Response |
| • CN | Core Network |
| • COTS | Commercial Off-the-Shelf |
| • CP | Cyclic Prefix |
| • CPE | Customer Premise Equipment |
| • CPICH | Common Pilot Channel |
| • CPICH Ec/No | Common Pilot Channel received energy per chip divided by the power density in the band |
| • CPU | Central Processing Unit |
| • CQI | Channel Quality Information |
| • C-RNTI | Cell Radio Network Temporary Identifier |
| • CSI | Channel State Information |
| • CSI-RS | Channel State Information Reference Signal |
| • D2D | Device-to-Device |
| • DAS | Distributed Antenna System |
| • DC | Direct Current |
| • DCCH | Dedicated Control Channel |
| • DIMM | Dual In-Line Memory Module |
| • DL | Downlink |
| • DM | Demodulation |
| • DMRS | Demodulation Reference Signal |
| • DN | Data Network |
| • DRX | Discontinuous Reception |
| • DSP | Digital Signal Processor |
| • DTX | Discontinuous Transmission |
| • DTCH | Dedicated Traffic Channel |
| • DUT | Device Under Test |
| • DVD | Digital Video Disk |
| • EBI | Evolved Packet System Bearer Identity |
| • E-CID | Enhanced Cell Identifier (positioning method) |
| • EEPROM | Electrically Erasable Programmable Read Only Memory |
| • ECGI | Evolved Cell Global Identifier |
| • eMTC | Enhanced Machine-Type Communication |
| • eNB | Enhanced or Evolved Node B |
| • ePDCCH | Enhanced Physical Downlink Control Channel |
| • EPROM | Erasable Programmable Read Only Memory |
| • EPS | Evolved Packet System |
| • E-SMLC | Evolved Serving Mobile Location Center |
| • E-UTRA | Evolved Universal Terrestrial Radio Access |
| • E-UTRAN | Evolved Universal Terrestrial Radio Access Network |
| • FDD | Frequency Division Duplexing |
| • FFS | For Further Study |
| • FPGA | Field Programmable Gate Array |
| • GERAN | Global System for Mobile (GSM) Communications Enhanced Data Rates for GSM Evolution Radio Access Network |
| • GHz | Gigahertz |
| • gNB | New Radio Base Station |
| • gNB-CU | New Radio Base Station Central Unit |
| • gNB-DU | New Radio Base Station Distributed Unit |
| • GNSS | Global Navigation Satellite System |
| • GPRS | General Packet Radio Service |
| • GPS | Global Positioning System |
| • GSM | Global System for Mobile Communications |
| • HARQ | Hybrid Automatic Repeat Request |
| • HDDS | Holographic Digital Data Storage |
| • HD-DVD | High-Density Digital Versatile Disc |
| • HO | Handover |
| • HPLMN | Home Public Land Mobile Network |
| • HRPD | High Rate Packet Data |
| • H-SMF | Home Session Management Function |
| • HSPA | High Speed Packet Access |
| • HSS | Home Subscriber Service |
| • IMS | Internet Protocol Multimedia Subsystem |
| • I/O | Input and Output |
| • IoT | Internet of Things |
| • IP | Internet Protocol |
| • LAN | Local Area Network |
| • LEE | Laptop Embedded Equipment |
| • LME | Laptop Mounted Equipment |
| • LOS | Line of Sight |
| • LPP | Long Term Evolution Positioning Protocol |
| • LTE | Long Term Evolution |
| • M2M | Machine-to-Machine |
| • MAC | Medium Access Control |
| • MANO | Management and Orchestration |
| • MBMS | Multimedia Broadcast Multicast Services |
| • MBSFN | Multimedia Broadcast Multicast Service Single Frequency Network |
| • MCE | Multi-Cell/Multicast Coordination Entity |
| • MDT | Minimization of Drive Tests |
| • MIB | Master Information Block |
| • MIMO | Multiple Input Multiple Output |
| • MME | Mobility Management Entity |
| • MSC | Mobile Switching Center |
| • MSR | Multi-Standard Radio |
| • MTC | Machine Type Communication |
| • NB-IoT | Narrowband Internet of Things |
| • NEF | Network Exposure Function |
| • NF | Network Function |
| • NFV | Network Function Virtualization |
| • NG-RAN | Fifth Generation Radio Access Network |
| • NIC | Network Interface Controller |
| • NPDCCH | Narrowband Physical Downlink Control Channel |
| • NR | New Radio |
| • NRF | Network Function Repository Function |
| • S-NSSAI | Single Network Slice Selection Assistance Information |
| • NSSF | Network Slice Selection Function |
| • O&M | Operation and Maintenance |
| • OCNG | Orthogonal Frequency Division Multiple Access Channel Noise Generator |
| • OFDM | Orthogonal Frequency Division Multiplexing |
| • OFDMA | Orthogonal Frequency Division Multiple Access |
| • OSS | Operations Support System |
| • OTDOA | Observed Time Difference of Arrival |
| • OTT | Over-the-Top |
| • PBCH | Physical Broadcast Channel |
| • PC | Personal Computer |
| • PCC | Policy and Charging Control |
| • P-CCPCH | Primary Common Control Physical Channel |
| • PCell | Primary Cell |
| • PCF | Policy Control Function |
| • PCFICH | Physical Control Format Indicator Channel |
| • PDA | Personal Digital Assistant |
| • PDCCH | Physical Downlink Control Channel |
| • PDN | Packet Data Network |
| • PDP | Profile Delay Profile |
| • PDSCH | Physical Downlink Shared Channel |
| • PDU | Protocol Data Unit |
| • P-GW | Packet Data Network Gateway |
| • PGW-C | Packet Data Network Gateway-Control Plane |
| • PHICH | Physical Hybrid Automatic Repeat Request Indicator Channel |
| • PL | Priority Level |
| • PLMN | Public Land Mobile Network |
| • PMI | Precoder Matrix Indicator |
| • PRACH | Physical Random Access Channel |
| • PRB | Physical Resource Block |
| • PROM | Programmable Read Only Memory |
| • PRS | Positioning Reference Signal |
| • PSS | Primary Synchronization Signal |
| • PSTN | Public Switched Telephone Networks |
| • PUCCH | Physical Uplink Control Channel |
| • PUSCH | Physical Uplink Shared Channel |
| • PVI | Pre-emption Vulnerability Indicator |
| • QFI | Quality of Service Flow Identifier |
| • QoS | Quality of Service |
| • RACH | Random Access Channel |
| • RAID | Redundant Array of Independent Disks |
| • RAM | Random Access Memory |
| • RAN | Radio Access Network |
| • RAT | Radio Access Technology |
| • RE | Resource Element |
| • RF | Radio Frequency |
| • RLM | Radio Link Management |
| • RNC | Radio Network Controller |
| • RNTI | Radio Network Temporary Identifier |
| • ROM | Read Only Memory |
| • RRC | Radio Resource Control |
| • RRH | Remote Radio Head |
| • RRM | Radio Resource Management |
| • RRU | Remote Radio Unit |
| • RS | Reference Signal |
| • RSCP | Received Signal Code Power |
| • RSRP | Reference Symbol Received Power / Reference Signal Received Power |
| • RSRQ | Reference Symbol Received Quality / Reference Signal Received Quality |
| • RSSI | Received Signal Strength Indicator |
| • RSTD | Reference Signal Time Difference |
| • RTT | Round Trip Time |
| • RUIM | Removable User Identity |
| • SCEF | Service Capability Exposure Function |
| • SCell | Secondary Cell |
| • SCH | Synchronization Channel |
| • SDRAM | Synchronous Dynamic Random Access Memory |
| • SDU | Service Data Unit |
| • SFN | System Frame Number |
| • S-GW | Serving Gateway |
| • SGSN | Serving General Packet Radio Service Support Node |
| • SI | System Information |
| • SIB | System Information Block |
| • SIM | Subscriber Identity Module |
| • SM | Session Management |
| • SMF | Session Management Function |
| • SNR | Signal to Noise Ratio |
| • SOC | System on a Chip |
| • SON | Self-Organizing Network |
| • SONET | Synchronous Optical Networking |
| • SRS | Sounding Reference Signal |
| • SS | Synchronization Signal |
| • SSS | Secondary Synchronization Signal |
| • TCP | Transmission Control Protocol |
| • TDD | Time Division Duplexing |
| • TDOA | Time Difference of Arrival |
| • TEID | Tunnel Endpoint Identifier |
| • TFT | Traffic Flow Template |
| • TOA | Time of Arrival |
| • TPMI | Transmit Precoding Matrix Indicator |
| • TRP | Transmission/Reception Point |
| • TSS | Tertiary Synchronization Signal |
| • TTI | Transmission Time Interval |
| • UDM | Unified Data Management |
| • UE | User Equipment |
| • UL | Uplink |
| • UMTS | Universal Mobile Telecommunications System |
| • UPF | User Plane Function |
| • USB | Universal Serial Bus |
| • USIM | Universal Subscriber Identity Module |
| • UTDOA | Uplink Time Difference of Arrival |
| • UTRA | Universal Terrestrial Radio Access |
| • UTRAN | Universal Terrestrial Radio Access Network |
| • V2I | Vehicle-to-Infrastructure |
| • V2V | Vehicle-to-Vehicle |
| • V2X | Vehicle-to-Everything |
| • VMM | Virtual Machine Monitor |
| • VNE | Virtual Network Element |
| • VNF | Virtual Network Function |
| • VoIP | Voice over Internet Protocol |
| • V-SMF | Virtual Session Management Function |
| • WAN | Wide Area Network |
| • WCDMA | Wideband Code Division Multiple Access |
| • WD | Wireless Device |
| • WiMax | Worldwide Interoperability for Microwave Access |
| • WLAN | Wireless Local Area Network |

## Claims

1. A method for transferring Protocol Data Unit, PDU, sessions, and their associated Quality of Service, QoS, Flows, of a User Equipment, UE, during a mobility procedure in which the UE is moved from a Fifth Generation System, 5GS, to an Evolved Packet System, EPS, the method performed by an Access and Mobility Management Function, AMF, in a 5G Core, 5GC, of the 5GS, and comprising:
- determining (700) that a target Mobility Management Entity, MME, for the mobility procedure in the EPS supports a first number of EPS Bearers that is less than a second number of EPS Bearer Identities, EBIs, wherein the EBIs are assigned to the QoS Flows of one or more PDU sessions, of the UE, said one or more PDU sessions that are to be transferred from the 5GS to the EPS;
- determining (702) which of the EBIs are not to be transferred to the target MME; and
- requesting the release (704) of the one or more PDU sessions and/or QoS Flows for which the EBIs are determined not to be transferred to the target MME.

2. The method of claim 1, further comprising retrieving a Session Management, SM, context for the PDU sessions and/or QoS Flows for which the EBIs are determined to be transferred.

3. The method of any of claims 1 to 2, wherein the target MME does not support 15 EPS Bearers.

4. The method of any of claims 1 to 3, wherein the target MME supports 8 EPS Bearers and more than 8 EBIs are assigned to PDU sessions and/or QoS Flows that are to be transferred.

5. The method of any of claims 1 to 4, wherein determining (702) which of the PDU sessions and/or QoS Flows of the UE are not to be transferred to the target MME comprises marking EBI values in a range as not to be transferred.

6. The method of claim 5, wherein determining which of the PDU sessions and/or QoS Flows of the UE are not to be transferred to the target MME comprises marking EBI values in a range 1 to 4 as not to be transferred.

7. The method of claim 5 or 6, wherein determining (702) which of the PDU sessions and/or QoS Flows of the UE are not to be transferred to the target MME further comprises, if more than 8 EBI values remain assigned to PDU sessions, determining additional EBI values not to be transferred.

8. The method of claim 7, wherein the additional EBI values not to be transferred are determined based on Single Network Slice Selection Assistance Information, S-NSSAI, value(s), Allocation and Retention Priority, ARP, value(s), or both S-NSSAI value(s) and ARP value(s).

9. The method of any of claims 1 to 8, wherein determining (702) which of the PDU sessions and/or QoS Flows of the UE are not to be transferred to the target MME comprises, if some QoS Flows in a given PDU session are not to be transferred, determining if a QoS data flow associated with a default QoS rule is to be transferred based on an Allocation and Retention Priority, ARP, Priority Level, PL, an ARP Pre-emption Vulnerability Indicator, PVI, or both the ARP PL and the ARP PVI.

10. An Access and Mobility Management Function, AMF, in a communications system (100), the AMF being configured to perform the method of any of claims 1 to 9.

11. The AMF of claim 10, further comprising:
- a communication interface; and
- processing circuitry configured to perform the method of any of claims 1 to 9.

## Patentansprüche

1. Verfahren zum Übertragen von Protocol-Data-Unit-Sitzungen, PDU-Sitzungen, und ihren zugehörigen Quality-of-Service-Flows, QoS-Flows, einer Benutzereinrichtung, UE, während eines Mobilitätsvorgangs, bei dem die UE von einem Fifth-Generation-System, 5GS, zu einem Evolved-Packet-System, EPS, übergeht, wobei das Verfahren von einer Access-and-Mobility-Management-Function, AMF, in einem 5G-Core, 5GC, des 5GS durchgeführt wird, und umfassend:
- Bestimmen (700), dass eine Ziel-Mobility-Management-Entity, Ziel-MME, für den Mobilitätsvorgang in dem EPS eine erste Anzahl von EPS-Bearers unterstützt, die kleiner ist als eine zweite Anzahl von EPS-Bearer-Identities, EBIs, wobei die EBIs den QoS-Flows einer oder mehrerer PDU-Sitzungen der UE zugewiesen sind, wobei die eine oder die mehreren PDU-Sitzungen von dem 5GS zum EPS übertragen werden;
- Bestimmen (702), welche der EBIs nicht zu der Ziel-MME zu übertragen sind; und
- Anfordern der Freigabe (704) der einen oder der mehreren PDU-Sitzungen und/oder QoS-Flows, für die bestimmt ist, dass die EBIs nicht zu der Ziel-MME zu übertragen sind.

2. Verfahren nach Anspruch 1, ferner umfassend Abrufen eines Session-Management-Kontextes, SM-Kontextes, für die PDU-Sitzungen und/oder QoS-Flows, für die bestimmt ist, dass die EBIs zu übertragen sind.

3. Verfahren nach einem der Ansprüche 1 bis 2, wobei die Ziel-MME 15 EPS-Bearers nicht unterstützt.

4. Verfahren nach einem der Ansprüche 1 bis 3, wobei die Ziel-MME 8 EPS-Bearers und mehr als 8 EBIs, die PDU-Sitzungen und/oder QoS-Flows zugewiesen sind und die zu übertragen sind, unterstützt.

5. Verfahren nach einem der Ansprüche 1 bis 4, wobei das Bestimmen (702), welche der PDU-Sitzungen und/oder QoS-Flows der UE nicht zu der Ziel-MME zu übertragen sind, Markieren von EBI-Werten in einem Bereich als nicht zu übertragend umfasst.

6. Verfahren nach Anspruch 5, wobei das Bestimmen, welche der PDU-Sitzungen und/oder QoS-Flows der UE nicht zu der Ziel-MME zu übertragen sind, Markieren von EBI-Werten in einem Bereich von 1 bis 4 als nicht zu übertragend umfasst.

7. Verfahren nach Anspruch 5 oder 6, wobei das Bestimmen (702), welche der PDU-Sitzungen und/oder QoS-Flows der UE nicht zu der Ziel-MME zu übertragen sind, ferner Bestimmen zusätzlicher EBI-Werte, die nicht zu übertragen sind, umfasst, wenn mehr als 8 EBI-Werte PDU-Sitzungen zugewiesen bleiben.

8. Verfahren nach Anspruch 7, wobei die zusätzlichen EBI-Werte, die nicht zu übertragen sind, auf Grundlage von (einem) Single-Network-Slice-Selection-Assistance-Information-Wert(en), S-NSSAI-Wert(en), (einem) Allocation-and-Retention-Priority-Wert(en), ARP-Wert(en), oder sowohl (einem) S-NSSAI-Wert(en) als auch (einem) ARP-Wert(en) bestimmt werden.

9. Verfahren nach einem der Ansprüche 1 bis 8, wobei das Bestimmen (702), welche der PDU-Sitzungen und/oder QoS-Flows der UE nicht zu der Ziel-MME zu übertragen sind, Bestimmen, ob ein QoS-Datenfluss, der einer Standard-QoS-Regel zugeordnet ist, auf Grundlage eines Priority-Level, PR, der Allocation-and-Retention-Priority, ARP, und eines ARP-Pre-emption-Vulnerability-Indicator, PVI, oder sowohl des ARP-PL und des ARP-PVI zu übertragen ist, umfasst, wenn einige QoS-Flows in einer bestimmten PDU-Sitzung nicht zu übertragen sind.

10. Access-and-Mobility-Management-Function, AMF, in einem Kommunikationssystem (100), wobei die AMF dazu konfiguriert ist, das Verfahren nach einem der Ansprüche 1 bis 9 durchzuführen.

11. AMF nach Anspruch 10, ferner umfassend:
- eine Kommunikationsschnittstelle; und
- Verarbeitungsschaltung, die dazu konfiguriert ist, das Verfahren nach einem der Ansprüche 1 bis 9 durchzuführen.

## Revendications

1. Procédé de transfert de sessions d'unités de données de protocole, PDU, et de leurs flux de valeur de qualité de service, QoS, associés d'un équipement d'utilisateur, UE, pendant une procédure de mobilité au cours de laquelle l'UE passe d'un système de cinquième génération, 5GS, à un système de paquet évolué, EPS, le procédé étant exécuté par une fonction de gestion d'accès et de mobilité, AMF, dans un cœur 5G, 5GC, du 5GS, et comprenant les étapes consistant à :
- déterminer (700) qu'une entité de gestion de mobilité, MME, cible pour la procédure de mobilité dans l'EPS prend en charge un premier nombre de supports EPS qui est inférieur à un deuxième nombre d'identités de support EPS, EBI, les EBI étant attribuées aux flux QoS d'une ou de plusieurs sessions PDU de l'UE, la ou lesdites sessions PDU devant être transférées du 5GS vers l'EPS ;
- déterminer (702) lesquelles des EBI ne doivent pas être transférées à la MME cible ; et
- demander la libération (704) de la ou des sessions PDU et / ou des flux QoS pour lesquels les EBI sont déterminées à ne pas être transférées à la MME cible.

2. Procédé selon la revendication 1, comprenant en outre la récupération d'un contexte de gestion de session, SM, pour les sessions PDU et / ou les flux QoS pour lesquels les EBI sont déterminées à être transférées.

3. Procédé selon l'une quelconque des revendications 1 à 2, dans lequel la MME cible ne prend pas en charge 15 supports EPS.

4. Procédé selon l'une quelconque des revendications 1 à 3, dans lequel la MME cible prend en charge 8 porteurs EPS, et plus de 8 EBI sont attribuées à des sessions PDU et / ou des flux QoS qui doivent être transférés.

5. Procédé selon l'une quelconque des revendications 1 à 4, dans lequel la détermination (702) des sessions PDU et / ou des flux QoS de l'UE qui ne doivent pas être transférés à la MME cible comprend le marquage des valeurs EBI dans une plage comme ne devant pas être transférées.

6. Procédé selon la revendication 5, dans lequel la détermination des sessions PDU et / ou flux QoS de l'UE qui ne doivent pas être transférés à la MME cible comprend le marquage des valeurs EBI dans une plage de 1 à 4 comme ne devant pas être transférées.

7. Procédé selon la revendication 5 ou 6, dans lequel la détermination (702) des sessions PDU et / ou des flux QoS de l'UE qui ne doivent pas être transférés à la MME cible comprend en outre, si plus de 8 valeurs EBI restent attribuées aux sessions PDU, la détermination des valeurs EBI supplémentaires à ne pas transférer.

8. Procédé selon la revendication 7, dans lequel les valeurs EBI supplémentaires à ne pas transférer sont déterminées sur la base de valeur(s) d'informations d'assistance à la sélection de tranche de réseau unique, S-NSSAI, de valeur(s) de priorité d'allocation et de rétention, ARP, ou les deux valeur(s) NSSAI et valeur(s) ARP.

9. Procédé selon l'une quelconque des revendications 1 à 8, dans lequel la détermination (702) des sessions PDU et / ou des flux QoS de l'UE qui ne doivent pas être transférés à la MME cible comprend, si certains flux QoS dans une session PDU donnée ne sont pas à transférer, la détermination pour savoir si un flux de données QoS associé à une règle QoS par défaut doit être transféré sur la base d'un niveau de priorité, PL, de priorité d'allocation et de rétention, ARP, d'un indicateur de vulnérabilité de préemption ARP, PVI, ou à la fois de l'ARP PL et l'ARP PVI.

10. Fonction de gestion d'accès et de mobilité, AMF, dans un système de communication (100), l'AMF étant configurée pour exécuter le procédé selon l'une quelconque des revendications 1 à 9.

11. AMF selon la revendication 10, comprenant en outre :
- une interface de communication ; et
- une circuiterie de traitement configurée pour effectuer le procédé selon une quelconque des revendications 1 à 9.
